# FASCICULE DE BREVET EUROPEEN

(11) **EP 4 406 848 B1**
(45) Date de publication et mention de la délivrance du brevet: **18.03.2026**
(21) Numéro de dépôt: 24154081.4
(22) Date de dépôt: 26.01.2024
(51) Int. Cl.: B64D 31/14, B64D 37/32

(54) **DISPOSITIF D'INHIBITION D'UNE COUPURE D'UN MOTEUR DE PROPULSION POUR AÉRONEF**
VORRICHTUNG ZUR VERHINDERUNG DER UNTERBRECHUNG EINES FLUGZEUGMOTORS
DEVICE FOR INHIBITING THE INTERRUPTION OF A PROPULSION ENGINE FOR AN AIRCRAFT

(30) Priorité: 30.01.2023 FR 2300837
(43) Date de publication de la demande: 31.07.2024
(73) Titulaire: Airbus Operations (S.A.S.), 31060 Toulouse Cedex 9 (FR)
(72) Inventeur: IMMORDINO, Thierry, 31060 Toulouse (FR); ALIX, Guillaume, 31060 Toulouse (FR); BOYER, David, 31060 Toulouse (FR); ANTONIO, Gilian, 31060 Toulouse (FR); GUENCHI, Bilal, 31060 Toulouse (FR)
(74) Mandataire: Cabinet Le Guen Maillet

(56) Documents cités:
- EP-B1- 1 827 978
- EP-B1- 3 909 860
- US-A1- 2016 318 620

## Description

### DOMAINE TECHNIQUE

La présente invention concerne l'inhibition d'une coupure d'un moteur de propulsion dans un aéronef. La présente invention concerne donc un dispositif permettant d'empêcher un arrêt du moteur de propulsion, ainsi qu'un procédé implémenté par un tel dispositif.

### ETAT DE LA TECHNIQUE ANTERIEURE

Dans de nombreux aéronefs, les pilotes peuvent ordonner la coupure d'un moteur destiné à la propulsion de l'aéronef en actionnant un organe de commande dédié dans le cockpit. Par exemple, cet organe de commande est intégré à un levier principal moteur EML (« engine master lever » en anglais) destiné au contrôle moteur. Lorsqu'il est actionné, cet organe de commande déclenche l'alimentation électrique d'un organe de coupure destiné à couper l'alimentation en carburant du moteur, comme par exemple une électrovanne de coupure de carburant. L'alimentation en carburant du moteur est alors stoppée, ce qui entraîne la coupure moteur.

Il est connu du document US 2016/0318620 A1 un système permettant d'empêcher le pilote de couper par inadvertance le carburant et/ou le moteur lorsque cela n'est pas sûr.

Il est souhaitable d'augmenter les mécanismes de sécurité dans le domaine de l'aéronautique et notamment de fournir une solution qui permette d'empêcher la coupure du moteur en cas d'erreur d'actionnement de l'organe de commande ou de non-respect de procédures d'urgence, sans inhiber une coupure moteur effective lorsque celle-ci est nécessaire pour la sécurité de l'aéronef par exemple en présence de feu.

### EXPOSE DE L'INVENTION

Un objet de la présente invention est de proposer un dispositif d'inhibition destiné à empêcher une coupure inappropriée d'un moteur de propulsion d'un aéronef. La coupure est exécutée par un organe de coupure actionné sélectivement par un organe de commande sous commande sélective d'un pilote de l'aéronef. L'aéronef comporte un autre moteur de propulsion, dit moteur de propulsion opposé. Le dispositif d'inhibition comporte une unité de contrôle sous forme de circuiterie électronique qui est configurée pour autoriser par défaut un éventuel actionnement de l'organe de coupure par l'organe de commande et pour :
- recevoir des informations représentatives d'un état activé ou inactivé d'une manette coupe-feu du moteur de propulsion, des informations représentatives d'un état ralenti ou non d'une commande du moteur de propulsion, des informations représentatives d'un état de fonctionnement correct ou incorrect du moteur de propulsion, des informations représentatives d'un état allumé, éteint ou en échec du moteur de propulsion opposé, et des informations représentatives d'un état de fonctionnement correct ou incorrect du moteur de propulsion opposé ;
- inhiber l'éventuel actionnement de l'organe de coupure par l'organe de commande, lorsque la manette coupe-feu du moteur de propulsion est dans un état inactivé, lorsqu'en outre le moteur de propulsion est dans un état de fonctionnement correct, et lorsqu'en outre la commande du moteur de propulsion est dans un état non ralenti ; et
- inhiber l'éventuel actionnement de l'organe de coupure par l'organe de commande, lorsque la manette coupe-feu du moteur de propulsion est dans un état inactivé, lorsqu'en outre le moteur de propulsion est dans un état de fonctionnement correct, lorsqu'en outre la commande du moteur de propulsion est dans un état ralenti, et lorsqu'en outre le moteur de propulsion opposé est dans un état d'échec ou que le moteur de propulsion opposé est dans un état de fonctionnement incorrect.

Il est ainsi possible d'inhiber une coupure (i.e., d'empêcher un arrêt) du moteur de propulsion en cas d'actionnement inapproprié de l'organe de coupure par l'organe de commande, résultant par exemple d'une commande erronée de l'organe de commande par le pilote de l'aéronef ou de non-respect de procédures d'urgence, tout en garantissant une coupure moteur effective lorsque celle-ci est nécessaire.

Selon un mode de réalisation particulier, la circuiterie électronique est en outre configurée pour recevoir des informations représentatives d'une vitesse de l'aéronef et/ou des informations représentatives d'une altitude de l'aéronef ; et pour inhiber l'éventuel actionnement de l'organe de coupure par l'organe de commande lorsqu'en outre la vitesse de l'aéronef est supérieure ou égale à un seuil de vitesse prédéfini et/ou l'altitude de l'aéronef est supérieure ou égale à un seuil d'altitude prédéfini.

Selon un mode de réalisation particulier, l'organe de coupure entraîne une coupure du moteur de propulsion lorsque ledit organe de coupure est électriquement alimenté par actionnement de l'organe de commande. Le dispositif d'inhibition comporte un interrupteur placé sur un lien d'alimentation électrique de l'organe de coupure depuis l'organe de commande de sorte à inhiber l'éventuelle alimentation électrique de l'organe de coupure par l'organe de commande lorsque l'interrupteur est en position ouverte. L'interrupteur est par défaut en position fermée, et l'unité de contrôle est configurée pour inhiber l'éventuel actionnement de l'organe de coupure par l'organe de commande en basculant l'interrupteur en position ouverte.

L'invention concerne également un système de coupure destiné à sélectivement permettre une coupure d'un moteur de propulsion d'aéronef comportant le dispositif d'inhibition dans l'un quelconque de ses modes de réalisation et comportant l'organe de coupure.

L'invention concerne également un aéronef comportant au moins un moteur de propulsion et, pour chaque moteur de propulsion de l'aéronef, le dispositif d'inhibition dans l'un quelconque de ses modes de réalisation.

Selon un mode de réalisation particulier, l'organe de commande est un levier principal moteur, et l'organe de coupure est une électrovanne de coupure haute pression, ou une électrovanne de coupure basse pression située en amont de l'électrovanne de coupure haute pression dans un circuit d'alimentation en carburant du moteur de propulsion.

L'invention concerne également un procédé destiné à empêcher une coupure inappropriée d'un moteur de propulsion d'un aéronef. La coupure est exécutée par un organe de coupure actionné sélectivement par un organe de commande sous commande sélective d'un pilote de l'aéronef. L'aéronef comporte un autre moteur de propulsion, dit moteur de propulsion opposé. Le procédé est implémenté par un dispositif d'inhibition, comporte d'autoriser par défaut un éventuel actionnement de l'organe de coupure par l'organe de commande et comporte des étapes de :
- recevoir des informations représentatives d'un état activé ou inactivé d'une manette coupe-feu du moteur de propulsion, des informations représentatives d'un état ralenti ou non d'une commande du moteur de propulsion, des informations représentatives d'un état de fonctionnement correct ou incorrect du moteur de propulsion, des informations représentatives d'un état allumé, éteint ou en échec du moteur de propulsion opposé, et des informations représentatives d'un état de fonctionnement correct ou incorrect du moteur de propulsion opposé ;
- inhiber l'éventuel actionnement de l'organe de coupure par l'organe de commande, lorsque la manette coupe-feu du moteur de propulsion est dans un état inactivé, lorsqu'en outre le moteur de propulsion est dans un état de fonctionnement correct, et lorsqu'en outre la commande du moteur de propulsion est dans un état non ralenti ; et
- inhiber l'éventuel actionnement de l'organe de coupure par l'organe de commande, lorsque la manette coupe-feu du moteur de propulsion est dans un état inactivé, lorsqu'en outre le moteur de propulsion est dans un état de fonctionnement correct, lorsqu'en outre la commande du moteur de propulsion est dans un état ralenti, et lorsqu'en outre le moteur de propulsion opposé est dans un état d'échec ou que le moteur de propulsion opposé est dans un état de fonctionnement incorrect.

Il est également proposé un produit programme d'ordinateur selon la revendication 8, ainsi qu'un support de stockage d'informations selon la revendication 9 stockant un tel programme d'ordinateur.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement, en vue de dessus, un aéronef équipé d'au moins un moteur de propulsion et d'un dispositif d'inhibition pour chaque moteur de propulsion dudit aéronef ;
[Fig. 2] illustre schématiquement un agencement matériel d'un ensemble formé par le dispositif d'inhibition, un organe de commande et un organe de coupure ;
[Fig. 3] illustre schématiquement un exemple d'architecture matérielle d'une unité de contrôle du dispositif d'inhibition ;
[Fig. 4] illustre schématiquement un algorithme d'inhibition d'une coupure moteur implémenté par le dispositif d'inhibition.

### EXPOSE DETAILLE DE MODES DE REALISATION

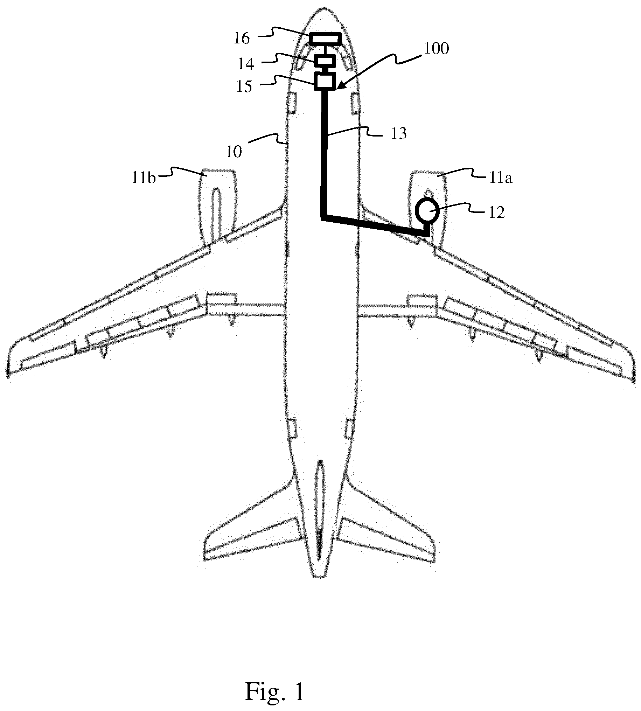

La **Fig. 1** illustre ainsi schématiquement, en vue de dessus, un aéronef 10. L'aéronef 10 comporte deux moteurs de propulsion 11a, 11b de part et d'autre du fuselage, comme par exemple un turboréacteur monté sous chaque aile de l'aéronef 10. L'aéronef 10 comporte un cockpit dans lequel au moins un pilote est destiné à s'installer pour manœuvrer l'aéronef 10. L'aéronef 10 comporte en outre une avionique 16 permettant d'assurer le bon fonctionnement de l'aéronef 10, de fournir de l'assistance au pilotage et de transmettre des informations de capteurs des moteurs de propulsion 11a, 11b à des instruments de bord situés dans le cockpit.

L'aéronef 10 comporte, pour chaque moteur de propulsion 11a, 11b, un système de contrôle moteur 100. A chaque moteur de propulsion 11a, 11b est donc associé un système de contrôle moteur 100. Pour des raisons de simplicité, seul le système de contrôle 100 du moteur de propulsion 11a est illustré sur la Fig. 1 et est décrit dans la suite de la description, l'autre moteur de propulsion 11b étant dit moteur de propulsion opposé 11b. Toutefois, l'aéronef 10 comporte un système de contrôle moteur 100 similaire associé au moteur de propulsion 11b.

Le système de contrôle moteur 100 comporte un organe de commande 14 pour une coupure moteur, situé dans le cockpit, et destiné à permettre à un pilote de l'aéronef 10 d'ordonner sélectivement la coupure du moteur de propulsion 11a. L'organe de commande 14 est par exemple un levier principal moteur EML (« Engine Master Lever » en anglais).

Le système de contrôle moteur 100 comporte en outre un organe de coupure 12, destiné à permettre sélectivement une coupure du moteur de propulsion 11a. L'organe de coupure 12 est actionné sélectivement par l'organe de commande 14. Autrement dit, lorsqu'un pilote de l'aéronef 10 actionne l'organe de commande 14 afin d'ordonner la coupure du moteur de propulsion 11a, l'organe de commande 14 actionne alors l'organe de coupure 12.

Dans un mode de réalisation particulier, l'organe de coupure 12 est destiné à permettre sélectivement un arrêt de l'alimentation en carburant du moteur de propulsion 11a. L'organe de coupure 12 est alors connecté à l'organe de commande 14 par un lien d'alimentation électrique 13, et lorsque l'organe de coupure 12 est électriquement alimenté par actionnement de l'organe de commande 14, l'alimentation en carburant du moteur de propulsion 11a est stoppée, ce qui entraîne la coupure moteur.

L'organe de coupure 12 est préférentiellement installé à proximité du moteur de propulsion 11a et est, dans un mode de réalisation particulier, une électrovanne de coupure haute pression HPSOV (« High Pressure Shut-Off Valve » en anglais). L'organe de coupure 12 peut aussi être une électrovanne de coupure basse pression LPSOV (« Low Pressure Shut-Off Valve » en anglais), située en amont de l'électrovanne de coupure haute pression HPSOV dans un circuit d'alimentation en carburant du moteur de propulsion 11a.

Le système de contrôle moteur 100 comporte en outre un dispositif d'inhibition 15. Le dispositif d'inhibition 15 comporte des moyens d'inhibition destinés à inhiber un éventuel actionnement de l'organe de coupure 12 par l'organe de commande 14.

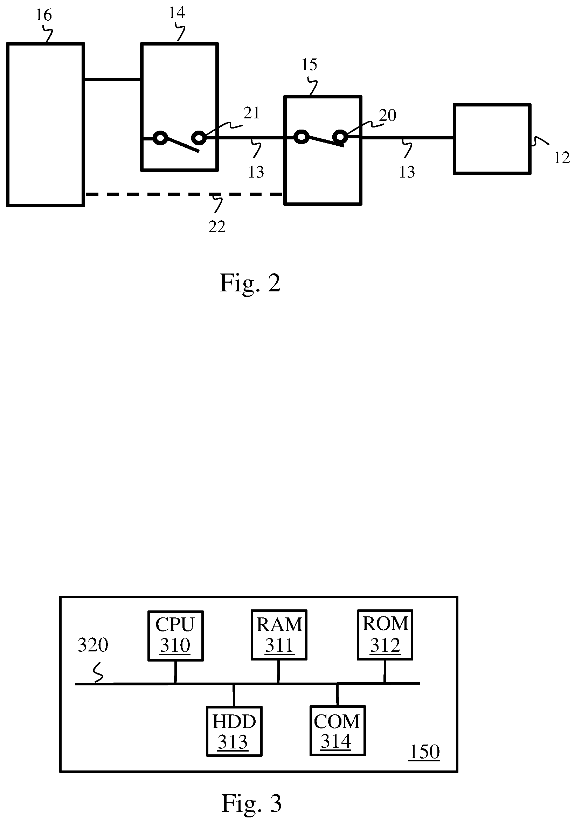

Dans un mode de réalisation particulier, les moyens d'inhibition comportent un interrupteur, tel que l'interrupteur 20 décrit en Fig. 2, placé sur un lien d'alimentation électrique de l'organe de coupure 12 tel que le lien d'alimentation électrique 13. L'alimentation électrique de l'organe de coupure 12 passe alors par le dispositif d'inhibition 15 et un basculement en position ouverte dudit interrupteur empêche l'organe de coupure 12 d'être alimenté électriquement ce qui inhibe ainsi un éventuel actionnement de l'organe de coupure 12 par l'organe de commande 14.

En variante, les moyens d'inhibition comportent une électrovanne qui, lorsqu'elle est activée, entraîne une mise en dérivation du carburant par rapport à l'organe de coupure 12 empêchant alors, en cas d'un éventuel actionnement de l'organe de coupure 12, de stopper l'alimentation en carburant du moteur de propulsion 11a.

Le dispositif d'inhibition 15, grâce à une unité de contrôle, effectue une surveillance de paramètres et détermine si l'actionnement de l'organe de coupure 12, par l'organe de commande 14 afin d'effectuer une coupure moteur, doit être inhibé ou pas.

Les paramètres surveillés par le dispositif d'inhibition 15 peuvent comporter des paramètres de vol, tels qu'une vitesse et/ou une altitude, permettant de déterminer si l'aéronef 10 se trouve dans des conditions d'une enveloppe de protection où l'inhibition de la coupure moteur est autorisée. L'avantage de mettre en place une telle enveloppe de protection est : de permettre la coupure du moteur lorsque celle-ci ne présente aucun danger pour la sécurité de l'aéronef, comme par exemple lorsque l'aéronef est statique au sol, et de permettre la coupure du moteur en vol lors de situations d'atterrissage d'urgence ou d'amerrissage.

Les paramètres surveillés peuvent en outre comporter un paramètre représentatif d'une situation d'urgence liée au moteur de propulsion 11a, tel qu'un risque incendie dans le moteur de propulsion 11a. Lorsqu'une situation d'urgence est détectée au niveau du moteur de propulsion 11a, l'actionnement de l'organe de coupure 12 ne doit pas être inhibé. Le paramètre représentatif d'une situation d'urgence peut être un état, activé ou inactivé, d'une manette coupe-feu du moteur de propulsion 11a. Lorsqu'elle est activée, la manette coupe-feu isole le moteur de propulsion 11a de toute source pouvant entretenir un incendie, telle que de l'électricité, de l'huile ou du carburant. Ainsi, un état inactivé indique qu'aucune procédure d'extinction d'incendie moteur n'est en cours sur le moteur de propulsion 11a.

Les paramètres surveillés peuvent en outre comporter un état, ralenti ou non, d'une commande du moteur de propulsion 11a, telle qu'une manette des gaz du moteur de propulsion 11a. Les paramètres surveillés peuvent en outre comporter un état de fonctionnement, correct ou incorrect, du moteur de propulsion 11a.

Les paramètres surveillés peuvent en outre comporter un état allumé (« on » en anglais), éteint (« shutdown » en anglais) ou en échec (« failed » en anglais), du moteur de propulsion opposé 11b, ainsi qu'un état de fonctionnement, correct ou incorrect, du moteur de propulsion opposé 11b. L'état allumé, éteint ou en échec du moteur de propulsion opposé 11b est déterminé à l'aide de deux éléments d'information concernant, d'une part, un paramètre de commande du moteur de propulsion opposé 11b (tel qu'une position de l'organe de commande 14 dudit moteur de propulsion opposé 11b) et, d'autre part, une pluralité de paramètres de fonctionnement du moteur de propulsion opposé 11b. Lorsque le paramètre de commande indique un moteur allumé, respectivement éteint, et que la pluralité de paramètres de fonctionnement indique en outre que le moteur est effectivement allumé, respectivement effectivement éteint, le moteur de propulsion opposé 11b est dans un état allumé, respectivement éteint. En revanche, lorsque le paramètre de commande indique un moteur allumé mais que la pluralité de paramètres de fonctionnement indique en outre un moteur effectivement éteint, alors le moteur de propulsion opposé 11b est dans un état d'échec.

Selon un mode de réalisation, lorsque l'aéronef 10 est dans l'enveloppe de protection et que le moteur de propulsion opposé 11b est dans un état d'échec ou dans un état de fonctionnement incorrect, l'actionnement de l'organe de coupure 12 du moteur de propulsion 11a est inhibé afin d'éviter que les deux moteurs de propulsion 11a et 11b ne soient simultanément inutilisables sans que le pilote en ait conscience.

La Fig. 2 illustre schématiquement un exemple d'agencement matériel d'un ensemble formé par le dispositif d'inhibition 15, de l'organe de commande 14 et de l'organe de coupure 12, selon un mode de réalisation particulier.

L'organe de commande 14 comporte au moins un interrupteur 21, situé sur le lien d'alimentation électrique 13. Ledit interrupteur 21 est par défaut dans une position ouverte. Lorsque le pilote actionne l'organe de commande 14 pour ordonner une coupure moteur, ledit interrupteur 21 bascule d'une position ouverte à une position fermée et permet ainsi d'alimenter électriquement l'organe de coupure 12. L'organe de commande 14 peut en outre comporter un ou plusieurs autres interrupteurs connectés à d'autres organes de l'aéronef 10, permettant par exemple d'informer l'avionique 16 d'une coupure moteur lorsqu'ils basculent de position.

Dans le mode de réalisation particulier de la Fig. 2, le dispositif d'inhibition 15, placé entre l'organe de commande 14 et l'organe de coupure 12, comporte un interrupteur 20, tel qu'un relai électromécanique, situé sur le lien d'alimentation électrique 13 de l'organe de coupure 12. L'alimentation électrique de l'organe de coupure 12 passe donc par l'interrupteur 20.

L'interrupteur 20 du dispositif d'inhibition 15 reste en position fermée tant que l'aéronef est dans l'enveloppe de protection. Tant que la position de l'interrupteur 20 du dispositif d'inhibition 15 est maintenue fermée, un actionnement de l'organe de coupure 12 par l'organe de commande 14, et le basculement qui en résulte de l'interrupteur 21 vers une position fermée, entraîne alors l'alimentation électrique de l'organe de coupure 12 par le lien d'alimentation électrique 13 et donc l'arrêt du moteur de propulsion 11a. L'arrêt du moteur de propulsion 11a est ainsi garanti dans des conditions de fonctionnement ou de sécurité qui l'exigent.

Dans le mode de réalisation particulier de la Fig. 2, le dispositif d'inhibition 15, grâce à son unité de contrôle, effectue une surveillance des paramètres et détermine si l'interrupteur 20 du dispositif d'inhibition 15 doit être ouvert ou non. Lorsque les paramètres surveillés vérifient des critères prédéfinis, l'unité de contrôle du dispositif d'inhibition 15 bascule l'interrupteur 20 en position ouverte, empêchant alors l'organe de coupure 12 d'être alimenté électriquement, et ce même lorsque l'organe de coupure 12 est actionné par l'organe de commande 14 et que l'interrupteur 21 de l'organe de commande 14 est en position fermée. L'arrêt du moteur de propulsion 11a est ainsi empêché par inhibition de l'actionnement de l'organe de coupure 12.

La surveillance des paramètres par l'unité de contrôle 150 du dispositif d'inhibition 15 est effectuée à l'aide d'informations reçues, par exemple en provenance de l'avionique 16, via un lien de communication 22. Le dispositif d'inhibition 15 peut en outre, ou alternativement, recevoir des informations en provenance d'autres éléments de l'aéronef 10, tels que des capteurs ou des actionneurs du moteur de propulsion 11a, des capteurs ou des actionneurs du moteur de propulsion opposé 11b ou encore des instruments de bord de l'aéronef 10.

La Fig. 3 illustre schématiquement un exemple d'architecture matérielle d'une unité de contrôle 150 du dispositif d'inhibition 15. L'unité de contrôle 150 comporte alors, reliés par un bus de communication interne 320 : un processeur ou CPU (« Central Processing Unit » en anglais) 310 ; une mémoire vive RAM (« Random Access Memory » en anglais) 311 ; une mémoire morte ROM (« Read Only Memory » en anglais) 312 ; une unité de stockage ou un lecteur de support de stockage, tel qu'un disque dur HDD (« Hard Disk Drive » en anglais) 313 ; et une interface 314 permettant de communiquer avec l'avionique 16 et/ou des capteurs du moteur de propulsion 11a, des capteurs du moteur de propulsion opposé 11b ou des instruments de bord de l'aéronef 10.

Le processeur 310 est capable d'exécuter des instructions chargées dans la RAM 311 à partir de la ROM 312, d'une mémoire externe (non représentée), d'un support de stockage, ou d'un réseau de communication. Lorsque l'unité de contrôle 150 est mise sous tension, le processeur 310 est capable de lire de la RAM 211 des instructions et de les exécuter. Ces instructions forment un programme d'ordinateur causant l'implémentation, par le processeur 310, de tout ou partie des algorithmes et étapes décrits ci-après en relation avec le dispositif d'inhibition 15.

Ainsi, tout ou partie des algorithmes et étapes décrits ci-après en relation avec le dispositif d'inhibition 15 peut être implémenté sous forme logicielle par exécution d'un ensemble d'instructions par une machine programmable, telle qu'un DSP (« Digital Signal Processor » en anglais) ou un microcontrôleur, ou sous forme matérielle par une machine ou un composant dédié, tel qu'un FPGA (« Field-Programmable Gate Array » en anglais) ou un ASIC (« Application-Specific Integrated Circuit » en anglais).

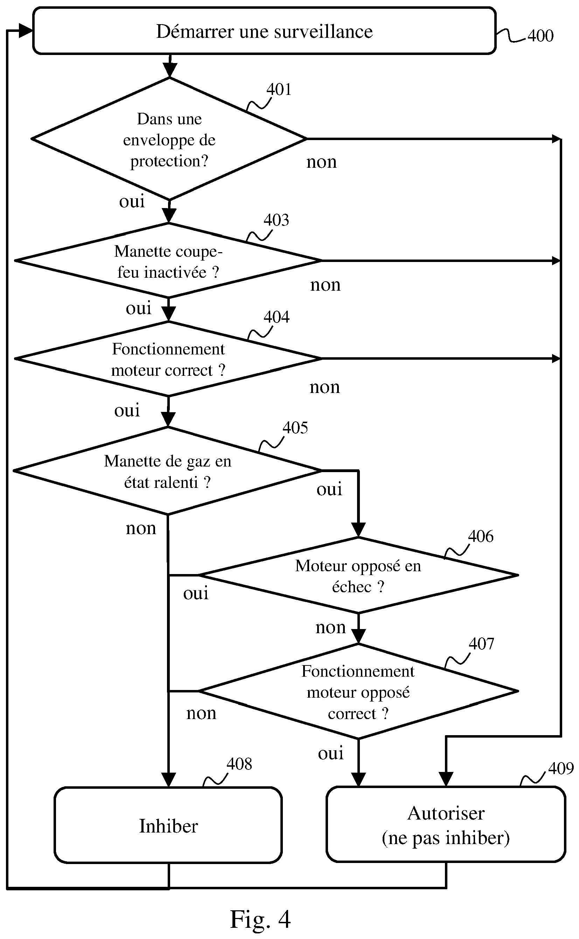

La Fig. 4 illustre schématiquement un algorithme d'inhibition d'une coupure moteur, implémenté par le dispositif d'inhibition 15.

Dans une étape 400, le dispositif d'inhibition 15 démarre la surveillance des paramètres. Le dispositif d'inhibition 15 reçoit des informations, par exemple en provenance de l'avionique 16, représentatives desdits paramètres afin d'effectuer la surveillance desdits paramètres. Notons que l'étape 400 ainsi que les étapes suivantes sont effectuées uniquement lorsque le moteur de propulsion 11a est allumé.

Dans une étape 401, selon un mode de réalisation particulier, le dispositif d'inhibition 15 détermine si l'aéronef 10 se trouve dans des conditions de l'enveloppe de protection susmentionnée.

Dans un mode de réalisation particulier, l'enveloppe de protection est définie par une vitesse minimale de l'aéronef 10. Ainsi, le dispositif d'inhibition 15 compare la vitesse de l'aéronef 10 à un seuil de vitesse prédéfini S1, égal par exemple à 80 nœuds (« knots » en anglais). Si la vitesse de l'aéronef 10 est supérieure ou égale au seuil de vitesse prédéfini S1, le dispositif d'inhibition 15 effectue l'étape 403. Sinon, le dispositif d'inhibition 15 effectue une étape 409.

Dans un mode de réalisation particulier, l'enveloppe de protection est définie par une altitude minimale de l'aéronef 10. Ainsi, le dispositif d'inhibition 15 compare l'altitude de l'aéronef 10 à un seuil d'altitude prédéfini S2, égal par exemple à 200 pieds (« feet » en anglais). Si l'altitude de l'aéronef 10 est supérieure ou égale au seuil d'altitude prédéfini S2, alors le dispositif d'inhibition 15 effectue l'étape 403. Sinon, le dispositif d'inhibition 15 effectue l'étape 409.

Dans un mode de réalisation particulier, l'enveloppe de protection est définie à la fois par une vitesse minimale de l'aéronef 10 et par une altitude minimale de l'aéronef 10, c'est-à-dire que les conditions d'enveloppe de protection sont remplies lorsque la vitesse de l'aéronef 10 est supérieure ou égale au seuil de vitesse prédéfini S1 et lorsqu'en outre l'altitude de l'aéronef 10 est supérieure ou égale au seuil d'altitude prédéfini S2.

A l'étape 403, le dispositif d'inhibition 15 surveille un paramètre représentatif d'une situation d'urgence liée au moteur de propulsion 11a et détermine si une situation d'urgence est détectée ou non au niveau du moteur de propulsion 11a. Pour cela, le dispositif d'inhibition 15 détermine si la manette coupe-feu du moteur de propulsion 11a est dans un état activé ou inactivé. Si la manette coupe-feu est dans un état inactivé, une étape 404 est effectuée. Sinon, l'étape 409 est effectuée. Ainsi, lorsqu'une situation d'urgence est détectée au niveau du moteur de propulsion 11a, liée par exemple à un risque incendie, la coupure du moteur de propulsion 11a est garantie.

A l'étape 404, le dispositif d'inhibition 15 surveille un paramètre représentatif d'un état de fonctionnement du moteur de propulsion 11a et détermine, en fonction dudit paramètre, si le moteur de propulsion 11a est dans un état de fonctionnement correct ou incorrect. Si le moteur de propulsion 11a est dans un état de fonctionnement correct, une étape 405 est effectuée. Sinon, l'étape 409 est effectuée. Ainsi, la coupure du moteur de propulsion 11a est garantie en cas de fonctionnement incorrect du moteur de propulsion 11a.

A l'étape 405, le dispositif d'inhibition 15 surveille un paramètre de gestion du moteur de propulsion 11a et détermine si une commande du moteur de propulsion 11a, telle que la manette des gaz du moteur de propulsion 11a est dans un état ralenti. La manette des gaz est dans un état ralenti lorsque sa position indique une consigne de puissance du moteur de propulsion 11a inférieure à une puissance prédéfinie. Si c'est le cas, une étape 406 est effectuée. Sinon, l'étape 408 est effectuée. Ainsi, lorsque l'organe de commande 14 est actionné par erreur par le pilote, par exemple en raison d'une confusion sur le levier à actionner ou d'une identification erronée du moteur en panne, l'arrêt du moteur de propulsion 11a peut être empêché.

A l'étape 406, le dispositif d'inhibition 15 détermine si le moteur de propulsion opposé 11b est allumé, éteint ou en échec. Si le moteur opposé 11b est allumé ou éteint, une étape 407 est effectuée. Si le moteur opposé 11b est en échec, une étape 408 est effectuée. Ainsi, lorsque le moteur opposé 11b est en échec, l'arrêt du moteur de propulsion 11a est empêché.

A l'étape 407, le dispositif d'inhibition 15 détermine si le moteur de propulsion opposé 11b est dans un état de fonctionnement correct. Si c'est le cas, l'étape 409 est effectuée. Sinon, autrement dit si le moteur de propulsion opposé 11b dysfonctionne, l'étape 408 est effectuée. Ainsi, lorsque le moteur de propulsion opposé 11b dysfonctionne, l'arrêt du moteur de propulsion 11a est empêché.

A l'étape 408, le dispositif d'inhibition 15 inhibe un éventuel actionnement de l'organe de coupure 12. Par exemple, selon le mode de réalisation particulier décrit en Fig. 2, le dispositif d'inhibition 15 bascule l'interrupteur 20 en position ouverte, empêchant d'alimenter électriquement l'organe de coupure 12 et empêchant ainsi l'arrêt du moteur de propulsion 11a, même en cas de l'actionnement de l'organe de coupure 12 par l'organe de commande 14. Il est ainsi possible d'empêcher l'arrêt du moteur de propulsion 11a lorsque l'actionnement de l'organe de coupure 12 est accidentel, inapproprié ou que des procédures d'urgence ne sont pas correctement appliquées.

En outre, dans un mode de réalisation particulier, le dispositif d'inhibition 15 envoie un message, à destination d'un dispositif d'affichage visible par le pilote, indiquant qu'une coupure moteur du moteur de propulsion 11a est inhibée et que le moteur de propulsion 11a ne peut pas être arrêté par l'actionnement de l'organe de coupure 12. Alternativement, le dispositif d'inhibition 15 envoie un tel message uniquement lorsqu'en outre l'organe de commande 14 est actionné par le pilote.

A l'étape 409, le dispositif d'inhibition 15 autorise un éventuel actionnement de l'organe de coupure 12. Par exemple, selon le mode de réalisation particulier décrit en Fig. 2, le dispositif d'inhibition 15 maintient l'interrupteur 20 en position fermée. Un actionnement de l'organe de coupure 12 par l'organe de commande 14 permet alors d'alimenter électriquement l'organe de coupure 12, ce qui entraîne une coupure du moteur de propulsion 11a.

Après l'implémentation de l'étape 408, le dispositif d'inhibition 15 retourne à l'étape 400, éventuellement après un délai d'attente prédéfini. De même, après l'implémentation de l'étape 409, le dispositif d'inhibition 15 retourne à l'étape 400, éventuellement après un délai d'attente prédéfini.

## Revendications

1. Dispositif d'inhibition (15) destiné à empêcher une coupure inappropriée d'un moteur de propulsion (11a) d'un aéronef (10), la coupure étant exécutée par un organe de coupure (12) actionné sélectivement par un organe de commande (14) sous commande sélective d'un pilote de l'aéronef (10), l'aéronef (10) comportant un autre moteur de propulsion (11b), dit moteur de propulsion opposé,
le dispositif d'inhibition comportant une unité de contrôle sous forme de circuiterie électronique qui est configurée pour autoriser par défaut un éventuel actionnement de l'organe de coupure (12) par l'organe de commande (14) et pour :
- recevoir (400) des informations représentatives d'un état activé ou inactivé d'une manette coupe-feu du moteur de propulsion, des informations représentatives d'un état ralenti ou non d'une commande du moteur de propulsion (11a), des informations représentatives d'un état de fonctionnement correct ou incorrect du moteur de propulsion (11a), des informations représentatives d'un état allumé, éteint ou en échec du moteur de propulsion opposé (11b), et des informations représentatives d'un état de fonctionnement correct ou incorrect du moteur de propulsion opposé (11b) ;
**caractérisé en ce que** l'unité de contrôle est configurée pour :
- inhiber (408) l'éventuel actionnement de l'organe de coupure (12) par l'organe de commande (14), lorsque la manette coupe-feu du moteur de propulsion (11a) est dans un état inactivé (403), lorsqu'en outre le moteur de propulsion (11a) est dans un état de fonctionnement correct (404), et lorsqu'en outre la commande du moteur de propulsion (11a) est dans un état non ralenti (405) ; et
- inhiber (408) l'éventuel actionnement de l'organe de coupure (12) par l'organe de commande (14), lorsque la manette coupe-feu du moteur de propulsion est dans un état inactivé (403), lorsqu'en outre le moteur de propulsion (11a) est dans un état de fonctionnement correct (404), lorsqu'en outre la commande du moteur de propulsion (11a) est dans un état ralenti (405), et lorsqu'en outre le moteur de propulsion opposé (11b) est dans un état d'échec (406) ou que le moteur de propulsion opposé (11b) est dans un état de fonctionnement incorrect (407).

2. Dispositif d'inhibition (15) selon la revendication 1, dans lequel la circuiterie électronique est en outre configurée pour :
- recevoir (400) des informations représentatives d'une vitesse de l'aéronef et/ou des informations représentatives d'une altitude de l'aéronef ; et
- inhiber l'éventuel actionnement de l'organe de coupure (12) par l'organe de commande (14) lorsqu'en outre la vitesse de l'aéronef est supérieure ou égale à un seuil de vitesse prédéfini et/ou l'altitude de l'aéronef est supérieure ou égale à un seuil d'altitude prédéfini.

3. Dispositif d'inhibition (15) selon l'une des revendications 1 et 2, dans lequel l'organe de coupure (12) entraîne une coupure du moteur de propulsion (11a) lorsque ledit organe de coupure (12) est électriquement alimenté par actionnement de l'organe de commande (14), le dispositif d'inhibition comportant un interrupteur (20) placé sur un lien d'alimentation électrique (13) de l'organe de coupure (12) depuis l'organe de commande (14) de sorte à inhiber l'éventuelle alimentation électrique de l'organe de coupure (12) par l'organe de commande (14) lorsque l'interrupteur (20) est en position ouverte, l'interrupteur (20) étant par défaut en position fermée, et l'unité de contrôle étant configurée pour inhiber l'éventuel actionnement de l'organe de coupure (12) par l'organe de commande (14) en basculant (408) l'interrupteur en position ouverte.

4. Système de coupure (100) destiné à sélectivement permettre une coupure d'un moteur de propulsion (11a) d'aéronef, le système de coupure (100) comportant le dispositif d'inhibition (15) selon l'une quelconque des revendications 1 à 3 et comportant l'organe de coupure (12).

5. Aéronef comportant au moins un moteur de propulsion de propulsion (11a,11b) et, pour chaque moteur de propulsion de propulsion (11a,11b) de l'aéronef (10), un dispositif d'inhibition (15) selon l'une quelconque des revendications 1 à 3 ou le système de coupure (100) selon la revendication 4.

6. Aéronef selon la revendication 5, dans lequel l'organe de commande (14) est un levier principal moteur, et dans lequel l'organe de coupure est une électrovanne de coupure haute pression, ou une électrovanne de coupure basse pression située en amont de l'électrovanne de coupure haute pression dans un circuit d'alimentation en carburant du moteur de propulsion (11a).

7. Procédé destiné à empêcher une coupure inappropriée d'un moteur de propulsion (11a) d'un aéronef (10), la coupure étant exécutée par un organe de coupure (12) actionné sélectivement par un organe de commande (14) sous commande sélective d'un pilote de l'aéronef (10), l'aéronef (10) comportant un autre moteur de propulsion (11b), dit moteur de propulsion opposé, le procédé étant implémenté par un dispositif d'inhibition (15), le procédé comportant d'autoriser par défaut un éventuel actionnement de l'organe de coupure (12) par l'organe de commande (14), le procédé comportant des étapes de :
- recevoir des informations représentatives d'un état activé ou inactivé d'une manette coupe-feu du moteur de propulsion, des informations représentatives d'un état ralenti ou non d'une commande du moteur de propulsion, des informations représentatives d'un état de fonctionnement correct ou incorrect du moteur de propulsion, des informations représentatives d'un état allumé, éteint ou en échec du moteur de propulsion opposé (11b), et des informations représentatives d'un état de fonctionnement correct ou incorrect du moteur de propulsion opposé (11b) ;
- inhiber (408) l'éventuel actionnement de l'organe de coupure (12) par l'organe de commande (14), lorsque la manette coupe-feu du moteur de propulsion est dans un état inactivé (403), lorsqu'en outre le moteur de propulsion est dans un état de fonctionnement correct (404), et lorsqu'en outre la commande du moteur de propulsion est dans un état non ralenti (405) ; et
- inhiber (408) l'éventuel actionnement de l'organe de coupure (12) par l'organe de commande (14), lorsque la manette coupe-feu du moteur de propulsion est dans un état inactivé (403), lorsqu'en outre le moteur de propulsion est dans un état de fonctionnement correct (404), lorsqu'en outre la commande du moteur de propulsion est dans un état ralenti (405), et lorsqu'en outre le moteur de propulsion opposé est dans un état d'échec (406) ou que le moteur de propulsion opposé est dans un état de fonctionnement incorrect (407).

8. Produit programme d'ordinateur pouvant être stocké sur un support et/ou téléchargé d'un réseau de communication, afin d'être lu par un processeur, et **caractérisé en ce qu'**il comprend des instructions qui, lorsqu'elles sont exécutées par l'unité de contrôle de la revendication 1, permettent d'implémenter le procédé selon la revendication 7, lorsque ledit programme d'ordinateur est exécuté par le processeur.

9. Support de stockage d'informations stockant un programme d'ordinateur selon la revendication 8.

## Patentansprüche

1. Verhinderungsvorrichtung (15), die dazu bestimmt ist, eine zweckwidrige Abschaltung eines Antriebsmotors (11a) eines Flugzeugs (10) zu unterbinden, wobei die Abschaltung durch ein Abschaltorgan (12) ausgeführt wird, das durch ein Ansteuerorgan (14) unter der selektiven Ansteuerung eines Piloten des Flugzeugs (10) selektiv betätigt wird, wobei das Flugzeug (10) einen weiteren Antriebsmotor (11b), als gegenüberliegender Antriebsmotor bezeichnet, umfasst,
wobei die Verhinderungsvorrichtung eine Steuereinheit in Form einer elektronischen Schaltungsanordnung umfasst, die dazu konfiguriert ist, eine eventuelle Betätigung des Abschaltorgans (12) durch das Ansteuerorgan (14) standardmäßig zu erlauben, und zu Folgendem konfiguriert ist:
- Empfangen (400) von Informationen, die für einen aktivierten oder deaktivierten Zustand eines Treibstoffabschaltschalters des Antriebsmotors repräsentativ sind, von Informationen, die für einen gedrosselten oder nicht gedrosselten Zustand einer Ansteuerung des Antriebsmotors (11a) repräsentativ sind, von Informationen, die für einen korrekten oder inkorrekten Betriebszustand des Antriebsmotors (11a) repräsentativ sind, von Informationen, die für einen eingeschalteten, ausgeschalteten oder defekten Zustand des gegenüberliegenden Antriebsmotors (1 1b) repräsentativ sind, und von Informationen, die für einen korrekten oder inkorrekten Betriebszustand des gegenüberliegenden Antriebsmotors (11b) repräsentativ sind;
**dadurch gekennzeichnet, dass** die Steuereinheit zu Folgendem konfiguriert ist:
- Verhindern (408) der eventuellen Betätigung des Abschaltorgans (12) durch das Ansteuerorgan (14), wenn sich der Treibstoffabschaltschalter des Antriebsmotors (11a) in einem deaktivierten Zustand befindet (403), wenn sich ferner der Antriebsmotor (11a) in einem korrekten Betriebszustand befindet (404) und wenn sich ferner die Ansteuerung des Antriebsmotors (11a) in einem nicht gedrosselten Zustand befindet (405); und
- Verhindern (408) der eventuellen Betätigung des Abschaltorgans (12) durch das Ansteuerorgan (14), wenn sich der Treibstoffabschaltschalter des Antriebsmotors in einem deaktivierten Zustand befindet (403), wenn sich ferner der Antriebsmotor (11a) in einem korrekten Betriebszustand befindet (404), wenn sich ferner die Ansteuerung des Antriebsmotors (11a) in einem gedrosselten Zustand befindet (405) und wenn sich ferner der gegenüberliegende Antriebsmotor (11b) in einem defekten Zustand befindet (406) oder sich der gegenüberliegende Antriebsmotor (11b) in einem inkorrekten Betriebszustand befindet (407).

2. Verhinderungsvorrichtung (15) nach Anspruch 1, wobei die elektronische Schaltungsanordnung ferner zu Folgendem konfiguriert ist:
- Empfangen (400) von Informationen, die für eine Geschwindigkeit des Flugzeugs repräsentativ sind, und/oder von Informationen, die für eine Höhe des Flugzeugs repräsentativ sind; und
- Verhindern der eventuellen Betätigung des Abschaltorgans (12) durch das Ansteuerorgan (14), wenn ferner die Geschwindigkeit des Flugzeugs größer als oder gleich einem vordefinierten Geschwindigkeitsschwellenwert ist und/oder die Höhe des Flugzeugs größer als oder gleich einem vordefinierten Höhenschwellenwert ist.

3. Verhinderungsvorrichtung (15) nach einem der Ansprüche 1 und 2, wobei das Abschaltorgan (12) eine Abschaltung des Antriebsmotors (11a) bewirkt, wenn das Abschaltorgan (12) durch Betätigung des Ansteuerorgans (14) mit Strom versorgt wird, wobei die Verhinderungsvorrichtung einen Schalter (20) umfasst, der in einer von dem Ansteuerorgan (14) kommenden Stromversorgungsverbindung (13) des Abschaltorgans (12) platziert ist, um die eventuelle Stromversorgung des Abschaltorgans (12) durch das Ansteuerorgan (14) zu verhindern, wenn sich der Schalter (20) in der geöffneten Stellung befindet, wobei sich der Schalter (20) standardmäßig in der geschlossenen Stellung befindet, und wobei die Steuereinheit dazu konfiguriert ist, die eventuelle Betätigung des Abschaltorgans (12) durch das Ansteuerorgan (14) zu verhindern, indem sie den Schalter in die geöffnete Stellung umschaltet (408).

4. Abschaltsystem (100), das dazu bestimmt ist, eine Abschaltung eines Antriebsmotors (11a) eines Flugzeugs selektiv zu gestatten, wobei das Abschaltsystem (100) die Verhinderungsvorrichtung (15) nach einem der Ansprüche 1 bis 3 umfasst und das Abschaltorgan (12) umfasst.

5. Flugzeug, das mindestens einen Antriebsmotor (11a, 11b) und, für jeden Antriebsmotor (11a, 11b) des Flugzeugs (10), eine Verhinderungsvorrichtung (15) nach einem der Ansprüche 1 bis 3 oder das Abschaltsystem (100) nach Anspruch 4 umfasst.

6. Flugzeug nach Anspruch 5, wobei das Ansteuerorgan (14) ein Motorhaupthebel ist und wobei das Abschaltorgan ein Hochdruckabschaltmagnetventil oder ein Niederdruckabschaltmagnetventil stromaufwärts des Hochdruckabschaltmagnetventils in einem Kraftstoffversorgungskreislauf des Antriebsmotors (11a) ist.

7. Verfahren, das dazu bestimmt ist, eine zweckwidrige Abschaltung eines Antriebsmotors (11a) eines Flugzeugs (10) zu unterbinden, wobei die Abschaltung durch ein Abschaltorgan (12) ausgeführt wird, das durch ein Ansteuerorgan (14) unter der selektiven Ansteuerung eines Piloten des Flugzeugs (10) selektiv betätigt wird, wobei das Flugzeug (10) einen weiteren Antriebsmotor (11b), als gegenüberliegender Antriebsmotor bezeichnet, umfasst, wobei das Verfahren durch eine Verhinderungsvorrichtung (15) implementiert wird, wobei das Verfahren das standardmäßige Erlauben einer eventuellen Betätigung des Abschaltorgans (12) durch das Ansteuerorgan (14) umfasst, wobei das Verfahren die folgenden Schritte umfasst:
- Empfangen von Informationen, die für einen aktivierten oder deaktivierten Zustand eines Treibstoffabschaltschalters des Antriebsmotors repräsentativ sind, von Informationen, die für einen gedrosselten oder nicht gedrosselten Zustand einer Ansteuerung des Antriebsmotors repräsentativ sind, von Informationen, die für einen korrekten oder inkorrekten Betriebszustand des Antriebsmotors repräsentativ sind, von Informationen, die für einen eingeschalteten, ausgeschalteten oder defekten Zustand des gegenüberliegenden Antriebsmotors (11b) repräsentativ sind, und von Informationen, die für einen korrekten oder inkorrekten Betriebszustand des gegenüberliegenden Antriebsmotors (11b) repräsentativ sind;
- Verhindern (408) der eventuellen Betätigung des Abschaltorgans (12) durch das Ansteuerorgan (14), wenn sich der Treibstoffabschaltschalter des Antriebsmotors in einem deaktivierten Zustand befindet (403), wenn sich ferner der Antriebsmotor in einem korrekten Betriebszustand befindet (404) und wenn sich ferner die Ansteuerung des Antriebsmotors in einem nicht gedrosselten Zustand befindet (405); und
- Verhindern (408) der eventuellen Betätigung des Abschaltorgans (12) durch das Ansteuerorgan (14), wenn sich der Treibstoffabschaltschalter des Antriebsmotors in einem deaktivierten Zustand befindet (403), wenn sich ferner der Antriebsmotor in einem korrekten Betriebszustand befindet (404), wenn sich ferner die Ansteuerung des Antriebsmotors in einem gedrosselten Zustand befindet (405) und wenn sich ferner der gegenüberliegende Antriebsmotor in einem defekten Zustand befindet (406) oder sich der gegenüberliegende Antriebsmotor in einem inkorrekten Betriebszustand befindet (407).

8. Computerprogrammprodukt, das auf einem Medium gespeichert werden kann und/oder aus einem Kommunikationsnetzwerk heruntergeladen werden kann, um von einem Prozessor gelesen zu werden, und **dadurch gekennzeichnet, dass** es Anweisungen beinhaltet, die bei Ausführung durch die Steuereinheit des Anspruchs 1 gestatten, das Verfahren nach Anspruch 7 zu implementieren, wenn das Computerprogramm von dem Prozessor ausgeführt wird.

9. Informationsspeichermedium, das ein Computerprogramm nach Anspruch 8 speichert.

## Claims

1. Blocking device (15) for preventing an inappropriate shut-off of a propulsion engine (11a) of an aircraft (10), the shut-off being executed by a shut-off unit (12) actuated selectively by a controller (14) under the selective control of a pilot of the aircraft (10), the aircraft (10) comprising another propulsion engine (11b), called the opposite propulsion engine,
the blocking device comprising a control unit in the form of electronic circuitry configured for enabling by default a possible actuation of the shut-off unit (12) by the controller (14), and for:
- receiving (400) information representative of an activated or inactivated state of a fuel shut-off lever of the propulsion engine, information representative of a reduced or non-reduced speed state of a control of the propulsion engine (11a), information representative of a correct or incorrect operating state of the propulsion engine (11a), information representative of an on, shut down or failed state of the opposite propulsion engine (11b), and information representative of a correct or incorrect operating state of the opposite propulsion engine (11b);
**characterized in that** the control unit is configured for:
- blocking (408) the possible actuation of the shut-off unit (12) by the controller (14), when the fuel shut-off lever of the propulsion engine (11a) is in an inactivated state (403), if the propulsion engine (11a) is also in a correct operating state (404), and if, in addition, the control of the propulsion engine (11a) is in a non-reduced speed state (405); and
- blocking (408) the possible actuation of the shut-off unit (12) by the controller (14), if the fuel shut-off lever of the propulsion engine is in an inactivated state (403), if, in addition, the propulsion engine (11a) is in a correct operating state (404), if, in addition, the control of the propulsion engine (11a) is in a reduced speed state (405), and if, in addition, the opposite propulsion engine (11b) is in a failed state (406) or the opposite propulsion engine (11b) is in an incorrect operating state (407).

2. Blocking device (15) according to Claim 1, wherein the electronic circuitry is also configured for:
- receiving (400) information representative of a speed of the aircraft and/or information representative of an altitude of the aircraft; and
- blocking the possible actuation of the shut-off unit (12) by the controller (14) if, in addition, the speed of the aircraft is greater than or equal to a predefined speed threshold, and/or the altitude of the aircraft is greater than or equal to a predefined altitude threshold.

3. Blocking device (15) according to either of Claims 1 and 2, wherein the shut-off unit (12) causes a shut-off of the propulsion engine (11a) when said shut-off unit (12) is supplied with power by the actuation of the controller (14), the blocking device comprising a switch (20) located on a power connector (13) running from the controller (14) to the shut-off unit (12), so as to block the possible supply of power to the shut-off unit (12) by the controller (14) when the switch (20) is in an open position, the switch (20) being in the closed position by default, and the control unit being configured for blocking the possible actuation of the shut-off unit (12) by the controller (14), by moving the switch (408) to the open position.

4. Shut-off system (100) for selectively allowing the shut-off of an aircraft propulsion engine (11a), the shut-off system (100) comprising the blocking device (15) according to any one of Claims 1 to 3 and comprising the shut-off unit (12).

5. Aircraft comprising at least one propulsion engine (11a, 11b) and, for each propulsion engine (11a, 11b) of the aircraft (10), a blocking device (15) according to any one of Claims 1 to 3 or the shut-off system (100) according to Claim 4.

6. Aircraft according to Claim 5, wherein the controller (14) is an engine master lever, and wherein the shut-off unit is a high-pressure shut-off solenoid valve, or a low-pressure shut-off solenoid valve located upstream of the high-pressure shut-off solenoid valve in a fuel supply circuit of the propulsion engine (11a).

7. Method for preventing an inappropriate shut-off of a propulsion engine (11a) of an aircraft (10), the shut-off being executed by a shut-off unit (12) actuated selectively by a controller (14) under the selective control of a pilot of the aircraft (10), the aircraft (10) comprising another propulsion engine (11b), called the opposite propulsion engine, the method being implemented by a blocking device (15), the method comprising enabling by default a possible actuation of the shut-off unit (12) by the controller (14), the method comprising the steps of:
- receiving information representative of an activated or inactivated state of a fuel shut-off lever of the propulsion engine, information representative of a reduced or non-reduced speed state of a control of the propulsion engine, information representative of a correct or incorrect operating state of the propulsion engine, information representative of an on, shut down or failed state of the opposite propulsion engine (11b), and information representative of a correct or incorrect operating state of the opposite propulsion engine (11b);
- blocking (408) the possible actuation of the shut-off unit (12) by the controller (14), when the fuel shut-off lever of the propulsion engine is in an inactivated state (403), if the propulsion engine is also in a correct operating state (404), and if, in addition, the control of the propulsion engine is in a non-reduced speed state (405); and
- blocking (408) the possible actuation of the shut-off unit (12) by the controller (14), if the fuel shut-off lever of the propulsion engine is in an inactivated state (403), if, in addition, the propulsion engine is in a correct operating state (404), if, in addition, the control of the propulsion engine is in a reduced speed state (405), and if, in addition, the opposite propulsion engine is in a failed state (406) or the opposite propulsion engine is in an incorrect operating state (407).

8. Computer program product that can be stored on a storage medium and/or downloaded from a communication network so as to be read by a processor, and that is **characterized in that** it comprises instructions which, when they are executed by the control unit of Claim 1, allow the method according to Claim 7 to be implemented, when said computer program is executed by the processor.

9. Data storage medium storing a computer program according to Claim 8.
